# EUROPÄISCHE PATENTSCHRIFT

(11) **EP 1 137 550 B1**
(45) Veröffentlichungstag und Bekanntmachung des Hinweises auf die Patenterteilung: **15.09.2004**
(21) Anmeldenummer: 99959390.8
(22) Anmeldetag: 08.12.1999
(51) Int. Cl.: B60C 23/04

(54) **VERFAHREN ZUM ZUORDNEN VON KENNUNGEN IN SIGNALEN VON SENDERN IN EINEM REIFENDRUCKÜBERWACHUNGSSYSTEM ZU DEN RÄDERN, AN WELCHEN SICH DIE SENDER BEFINDEN**
METHOD FOR ASSIGNING IDENTIFYING ELEMENTS IN SIGNALS EMITTED BY TRANSMITTERS IN A TIRE PRESSURE MONITORING SYSTEM TO THE WHEELS ON WHICH THE TRANSMITTERS ARE MOUNTED
PROCEDE POUR AFFECTER DES ELEMENTS D'IDENTIFICATION CONTENUS DANS DES SIGNAUX PROVENANT D'EMETTEURS DANS UN SYSTEME DE SURVEILLANCE DE LA PRESSION DE PNEUS, AUX ROUES OU SE TROUVENT LES EMETTEURS

(30) Priorität: 09.12.1998 DE 19856861
(43) Veröffentlichungstag der Anmeldung: 04.10.2001
(73) Patentinhaber: Beru AG, 71636 Ludwigsburg (DE)
(72) Erfinder: NORMANN, Norbert, D-75223 Niefern-Öschelbronn (DE); MICHAL, Roland, 6890 Lustenau (AT); KESSLER, Ralf, D-76327 Pfinztal (DE); KÜHNLE, Andreas, D-75433 Maulbronn (DE); SCHULZE, Gunter, Lothar, D-75228 Ispringen (DE)
(74) Vertreter: Twelmeier, Ulrich, Dipl.Phys.
(86) Internationale Anmeldenummer: PCT/EP1999/009648
(87) Internationale Veröffentlichungsnummer: WO 2000/034062

(56) Entgegenhaltungen:
- EP-A- 0 760 299
- DE-A- 19 618 658
- DE-A- 19 728 419
- DE-A- 19 735 686

## Beschreibung

Die Erfindung geht von einem Verfahren mit den im Oberbegriff des Patentanspruchs 1 angegebenen Merkmalen aus.

Ein Verfahren zum Zuordnen von Kennungen, die in Signalen enthalten sind, welche von Sendern in einem Reifendrucküberwachungssystem ausgesandt werden,
das aus je einem Druckmeßfühler, einem Sender und einer Sendeantenne an jedem einer Anzahl von Rädern eines Fahrzeuges, aus einer oder mehreren Empfangsantennen an der Karosserie des Fahrzeuges und aus einer an diese über Kabel angeschlossenen Empfangs- und Auswerteelektronik besteht,
zu den Positionen der Räder, an welchen sich die Sender befinden, indem die Signale, welche die Kennung enthalten, von der einen oder den mehreren Empfangsantennen aufgefangen, an die Empfangs- und Auswerteelektronik weitergeleitet und darin hinsichtlich ihrer Kennung ausgewertet werden, ist aus der DE 196 08 478 A1 bekannt. Das bekannte Reifendrucküberwachungssystem hat an jedem Rad eines Fahrzeugs einen Druckmeßfühler, eine mit dem Druckmeßfühler verbundene elektronische Auswerteschaltung, einen Sender, eine Sendeantenne und eine Batterie, welche die am Rad vorgesehene Elektronik (nachfolgend auch als Radelektronik bezeichnet) mit Strom versorgt. Den Rädern benachbart sind an der Karosserie des Fahrzeuges Empfangsantennen vorgesehen, welche über Kabel an eine zentrale Empfangs- und Auswerteschaltung (nachfolgend auch als zentrale Auswerteelektronik bezeichnet) angeschlossen sind.

Ein Problem, das sich bei solchen Reifendrucküberwachungssystemen stellt, ist die eindeutige Zuordnung der Sender zu der Position ihres Rades am Fahrzeug. Zu diesem Zweck erzeugen die Sender ein in vier Abschnitte unterteiltes Signal, bestehend aus Präambel, Identifikationssignal, Meßsignal und Postambel. Anhand des Identifikationssignals (Kennung) kann die zentrale Auswerteelektronik erkennen, wo sich das sendende Rad am Fahrzeug befindet Voraussetzung dafür ist jedoch, daß die Kennung und die Radposition einander zuvor eindeutig zugeordnet wurden und daß diese Zuordnung in der zentralen Auswerteelektronik abgespeichert wurde. Die DE 196 08 478 A1 offenbart eine Möglichkeit, wie diese Zuordnung nach der erstmaligen Montage von Rädern am Fahrzeug oder nach einem Radwechsel selbsttätig aus den von den Radelektroniken gesendeten Signalen bestimmt werden kann. Dazu findet eine statistische Auswertung der Intensität der empfangenen Signale statt: Zwar empfängt jede Empfangsantenne Signale von allen sendenden Rädern des Fahrzeuges, doch geht man von der Annahme aus, daß die Signale von dem der jeweiligen Empfangsantenne nächstliegenden Rad im statistischen Mittel mit der stärksten Intensität empfangen werden.

Ein ähnliches Zuordnungsverfahren ist aus der DE 196 08 479 A1 bekannt.

Die bekannten Zuordnungsverfahren haben den Nachteil, daß sie erhebliche Kosten des Reifendrucküberwachungssystems verursachen, weil für jedes Rad in seiner Nachbarschaft eine gesonderte Empfangsantenne vorgesehen ist, welche mit einem Antennenkabel an die zentrale Auswerteelektronik im Fahrzeug anzuschließen ist.

Die nicht vorveröffentlichte DE 197 35 686 A1 offenbart zur Lösung der Aufgabe, eine Möglichkeit aufzuzeigen, die automatische Zuordnung der von den Radelektroniken gesendeten Kennungen zu bestimmten Radpositionen mit geringerem Aufwand zu erreichen, die am jeweiligen Rad vorhandene Radelektronik dahingehend auszubilden, daß sie nicht nur den Reifendruck mißt und an die zentrale Auswerteelektronik übermittelt, sondern zusätzlich noch Informationen über den Bewegungszustand des Rades ermittelt und an die zentrale Auswerteelektronik weiterleitet. Aus dem Bewegungszustand des Rades wird in der zentralen Auswerteelektronik dann eine Information über die Position des betreffenden Rades am Fahrzeug gewonnen.

Informationen darüber, ob ein Rad an der rechten oder linken Seite des Fahrzeuges angeordnet ist, liefert das in der EP 0 760 299 A1 offenbarte Verfahren mit den Merkmalen des Oberbegriffs des Patentanspruchs 1 mit Hilfe eines Rollschalters oder eines Tangentialbeschleunigungsaufnehmens, der die Drehrichtung des jeweiligen Rades ermittelt. Allein damit kann nicht zuverlässig zwischen den Rädern auf der rechten Seite und Rädern auf der linken Seite des Fahrzeugs unterschieden werden.

Der vorliegenden Erfindung liegt die Aufgabe zugrunde, ein Verfahren zur Fahrzeugseiten-Zuordnung eines Reifendrucküberwachungssensors zu schaffen, welches auch bei nicht gleichzeitig erzeugten Signalen der Radelektroniken eine sichere Zuordnung ermöglicht.

Diese Aufgabe wird durch ein Verfahren mit den im Patentanspruch 1 angegebenen Merkmalen gelöst.

Nützliche Informationen über den Bewegungszustand des Rades werden erfindungsgemäß aus am Rad auftretenden Beschleunigungen ermittelt. Die von einem mit der Radelektronik verbundenen Beschleunigungssensor gelieferten Beschleunigungssignale werden entweder in der Radelektronik ausgewertet und das Ergebnis der Auswertung wird an die zentrale Auswerteelektronik gesendet, oder die Beschleunigungssignale werden von der Radelektronik in das regelmäßig auszusendende Signal eingefügt, mit ihm an die zentrale Auswerteelektronik gesendet und darin ausgewertet.

Miniaturisierte Beschleunigungssensoren auf Halbleiterbasis, die mit verhältnismäßig geringem Aufwand in die ohnehin benötigte Radelektronik integriert werden können, sind verfügbar. Der damit verbundene zusätzliche Aufwand in der Radelektronik ist wesentlich geringer als der Aufwand, der durch den Fortfall von Empfangsantennen und ihrer Verkabelung vermieden wird.

Auf folgende Weisen lassen sich Informationen über die Radposition aus Beschleunigungssignalen ableiten, die am Rad gewonnen wurden:
1. Durch Drehen des Rades tritt an diesem eine Zentrifugalbeschleunigung auf. Nur an mitgeführten Reserverädern tritt auch bei rollendem Fahrzeug keine Zentrifugalbeschleunigung auf. Signale, welche bei rollendem Fahrzeug empfangen werden, aber die Zentrifugalbeschleunigung z = O signalisieren, werden deshalb einem mitgeführten Reserverad zugeordnet.
2. Die Stärke der am Rad auftretenden Zentrifugalbeschleunigung ist abhängig von der Drehzahl des Rades. Wird die Stärke der Zentrifugalbeschleunigung z in der zentralen Empfangs- und Auswerteschaltung über eine vorgegebene Zeitspanne integriert, so ist die Größe des Integralwertes ein Maß für den Weg, den das Rad in dieser Zeitspanne zurückgelegt hat. Da die gelenkten Vorderräder bei Kurvenfahrt einen größeren Weg zurücklegen als die ungelenkten Hinterräder eines Fahrzeuges, wird der Integralwert für ein gelenktes Vorderrad größer sein als für ein nicht gelenktes Hinterrad. Die Kennungen, die in den Signalen enthalten sind, welche zu den größten Integralwerten der Zentrifugalbeschleunigung z führen, können deshalb den gelenkten Vorderrädem des Fahrzeuges zugeordnet werden.
3. Bei übereinstimmender Einbaulage des Beschleunigungssensors am Rad liefem ein Beschleunigungssensor an einem Rad auf der rechten Seite des Fahrzeuges und ein Beschleunigungssensor an einem Rad auf der linken Seite des Fahrzeuges bei beschleunigtem Fahrzeug
   Beschleunigungssignale mit entgegengesetzten Vorzeichen. Als Bahnbeschleunigung b wird hier die beim Beschleunigen (oder beim Verzögern) in Umfangsrichtung des Rades auftretende Beschleunigungskomponente bezeichnet. Das Vorzeichen des Bahnbeschleunigungssignals erlaubt eine Unterscheidung zwischen rechten und linken Rädern, wobei das Vorzeichen vorzugsweise bereits in der Radelektronik bestimmt und dann der zentralen Auswerteelektronik übermittelt wird. Am besten wird die Unterscheidung zwischen rechten und linken Rädern in der Beschleunigungsphase nach einem Start des Fahrzeugs vorgenommen.
   Hat man aus der Zentrifugatbeschleunigung z die Kennung des Reserverades ermittelt und aus der Bahnbeschleunigung b ermittelt, welche Räder auf der rechten Seite und welche Räder auf der linken Seite des Fahrzeuges angeordnet sind, dann kann man die restliche Unterscheidung zwischen vorderen Rädern und hinteren Rädern anstatt durch Auswertung von Integralwerten der Zentrifugalbeschleunigung z auch durch eine gegenüber dem Stand der Technik verringerte Anzahl von Antennen auf der Empfangsseite bestimmen, nämlich dadurch, daß den auf einer gemeinsamen Achse des Fahrzeuges angeordneten Rädern lediglich eine einzige, gemeinsame Empfangsantenne zugeordnet wird. Die Unterscheidung zwischen den einzelnen Achsen kann dann durch statistische Auswertung der empfangenen Signalintensitäten auf dieselbe Weise erfolgen, wie sie in der DE 196 08 478 A1 oder in der DE 196 08 479 A1 offenbart ist, wobei man jedoch nicht mehr für jedes Rad eine eigene Empfangsantenne am Fahrzeug benötigt, sondern für die auf einer gemeinsamen Achse angeordneten Räder nur noch eine gemeinsame Empfangsantenne.
4. Zur Unterscheidung der gelenkten Vorderräder von den nicht gelenkten Hinterrädem des Fahrzeuges kann nach einer anderen Weiterbildung der Erfindung auch das Auftreten einer Coriolisbeschleunigung am gelenkten Rad beobachtet und ausgewertet werden. Eine Coriolisbeschleunigung tritt an den ungelenkten Rädern nicht auf, wohl aber an den gelenkten Rädern wenn Lenkbewegungen ausgeführt werden. Signalisiert ein Rad das Auftreten einer Coriolisbeschleunigung, dann ist klar, daß es sich um eines der gelenkten Vorderräder handeln muß.
   Die Zentrifugalbeschleunigung z wirkt senkrecht zur Bahnbeschleunigung b. Die Coriolisbeschleunigung wiederum wirkt senkrecht zur Zentrifugalbeschleunigung z und zur Bahnbeschleunigung **b**.
   Ein Beschleunigungssensor, der zwischen Beschleunigungen in Richtung von drei unterschiedlichen Koordinatenachsen unterscheiden kann oder eine Anordnung von drei Beschleunigungssensoren, welche in drei verschiedenen Koordinatenachsen empfindlich sind, eignet sich mit Vorteil für die vorliegende Erfindung. Die Erfindung ist aber nicht nur mit einem dreiachsigen Beschleunigungssensor durchführbar, sondern, wie vorstehend erläutert, auch mit Hilfe eines zweiachsigen Beschleunigungssensors bzw. mit einer Anordnung von zwei Beschleunigungssensoren,
   von denen **der eine** die Zentrifugalbeschleunigung z erfassen kann und es erlaubt, das Reserverad zu bestimmen. zwischen gelenkten Vorderrädern und ungelenkten Hinterrädern zu unterscheiden und zwischen einem Verzögern und einem Beschleunigen des Fahrzeugs zu unterscheiden,
   und von denen es **der andere** erlaubt, die an der Radelektronik auftretende Bahnbeschleunigung **b** und deren Vorzeichen zu erfassen, was die Unterscheidung zwischen rechten und linken Rädern ermöglicht.

Die Radelektroniken der verschiedenen Räder sind voneinander unabhängig und senden deshalb normalerweise nicht gleichzeitig. Die Signale, die von unterschiedlichen Rädern kommen und in der zentralen Auswerteelektronik miteinander verglichen werden. um festzustellen, an welcher Stelle des Fahrzeuges sich ein durch eine bestimmte Kennung charakterisiertes Rad befindet, müssen in der zentralen Auswerteelektronik deshalb zwischengespeichert werden, um miteinander verglichen werden zu können. Die zentrale Auswerteelektronik ist deshalb mit einem dafür geeigneten flüchtigen Speicher auszustatten. Dem Fachmann ist bekannt, daß er das einfach, z. B. mittels eines Mikroprozessors, verwirklichen kann, welcher die außerdem die Auswertung der empfangenen Signale vornimmt Weil die zu vergleichenden Signale nicht gleichzeitig erzeugt werden, kann es passieren, daß ein Signal von einem rechten Rad. welches erzeugt wurde, während das Fahrzeug beschleunigt wurde, verglichen wird mit einem Signal von einem linken Rad, welches erzeugt wurde, während das Fahrzeug verzögert wurde. In diesem Fall kann aus dem Vorzeichen der Bahnbeschleunigungen **b** allein noch nicht zwischen rechten und linken Rädern unterschieden werden. Erfindungsgemäß ist deshalb vorgesehen. an jedem Rad bei der Bestimmung der Bahnbeschleunigung b und ihres Vorzeichens zugleich die zeitliche Änderung der Zentrifugalbeschleunigung z zu bestimmen und zusammen mit der Bahnbeschleunigung **b** und ihrem Vorzeichen an die zentrale Auswerteelektronik zu senden. Das Vorzeichen der zeitlichen Änderung (**dz/dt**) der Zentrifugalbeschleunigung z zeigt nämlich an, ob das Fahrzeug beschleunigt wurde (positives Vorzeichen) oder ob das Fahrzeug verzögert wurde (negatives Vorzeichen). Durch gemeinsamens Auswerten des Vorzeichens der zeitlichen Änderung (**dz/dt**) der Zentrifugalbeschleunigung z und des Vorzeichens der Bahnbeschleunigung b für jedes Rad läßt sich nun eindeutig zwischen rechten Rädern und linken Rädern unterscheiden. Am einfachsten bildet man hierzu in der zentralen Auswerteelektronik für jedes Rad das Produkt aus diesen Vorzeichen, welches unabhängig davon, ob das Fahrzeug beschleunigt oder verzögert wurde, bei der Bahnbeschleunigung **b** für Räder auf der linken Fahrzeugseite das entgegengesetzte Vorzeichen liefert wie für Räder auf der rechten Fahrzeugseite. Voraussetzung dafür ist, daß die Beschleunigungssensoren mit ihren beiden Achsen, in deren Richtung sie für das Bestimmen der Bahnbeschleunigung **b** und der Zentrifugalbeschleunigung z empfindlich sind, in Bezug auf das jeweilige Rad gleich orientiert sind, was bei untereinander gleichen Radelektroniken dadurch gewährleistet ist, daß sie an den verschiedenen Rädern in übereinstimmender Einbaulage vorgesehen sind.

Es sei beispielsweise angenommen. daß bei beschleunigtem Fahrzeug das Vorzeichen der Bahnbeschleunigung **b** an einem rechten Rad positiv sei: dann ist es an einem linken Rad negativ und das Vorzeichen der zeitlichen Änderung (**dz/dt**) der Zentrifugalbeschleunigung **z** ist für beide Räder positiv. Dann gilt für das Produkt der Vorzeichen
für das rechte Rad: sign (**dz/dt**). sign **b** = (+1)(+1) = +1
und für das linke Rad: sign (**dz/dt**). sign **b** = (+1)(-1) = -1.

Linkes Rad und rechtes Rad unterscheiden sich also durch das Vorzeichen des Produktes.

Nehmen wir nun an, daß das Signal am rechten Rad erzeugt wurde, während das Fahrzeug beschleunigt wurde. wohingegen das Signal am linken Rad erzeugt wurde, während das Fahrzeug verzögert wurde. Dann ergibt sich für das Vorzeichenprodukt
für das rechte Rad: sign (**dz/dt**). sign **b** = (+1)(+1) = +1
und für das linke Rad: sign (**dz/dt**). sign **b** = (-1)(+1) = -1.

Es ergibt sich also anhand des Vorzeichenproduktes dieselbe Unterscheidung zwischen dem linken Rad und dem rechten Rad wie im zuerst angenommenen Fall.

Hat man auf diese Weise zwischen linken und rechten Rädern unterschieden, kann man mit Hilfe von nur zwei Antennen, von denen die eine den Rädern auf der vorderen Achse des Fahrzeuges und die andere den Rädern auf der hinteren Achse des Fahrzeuges zugeordnet ist, auch noch unterscheiden, welches der linken Räder vorne und und welches hinten ist, und welches der rechten Räder vorne und und welches hinten ist. indem man die Intensität (Empfangsamplitude) der empfangenen Signale auswertet. Eine im Bereich der Vorderachse angeordnete Antenne wird nämlich die Signale. die von den Vorderrädern stammen. im Mittel mit größerer Amplitude empfangen als die Signale. die von den Hinterrädern stammen. Umgekehrt wird eine Antenne. die sich im Bereich der Hinterachse befindet. von den Hinterrädern stammende Signale im Mittel mit größerer Amplitude empfangen als Signale, die von den Vorderrädern stammen. Dazu müssen die Antennen gamicht einmal in der Mitte zwischen rechten und linken Rädern liegen, sondern können auch außermittig angeordnet sein, da jedenfalls durch Kombination der Informationen über die Drehrichtung und die Empfangsamplitude die Unterscheidung zwischen vorne und hinten möglich ist.

Es ist sogar möglich, mit nur einer einzigen Antenne auszukommen, wenn diese entweder näher bei der Vorderachse oder näher bei der Hinterachse so angeordnet ist. daß sie in der Lage ist, Signale von allen vier Rädern mit hinreichender Amplitude zu empfangen. Für das Bestimmen der Signalintensitäten kann nicht nur ein einziges Signal herangezogen werden, sondern eine Folge von mehreren von ein-und-demselben Rad stammenden Signalen. um die Genauigkeit der Intensitätsbestimmung zu erhöhen.Ein dazu geeignetes statistischen Verfahren wird beispielsweise in der DE 196 08 478 A1 und der DE 196 08 479 A1 offenbart.

## Patentansprüche

1. Verfahren zum Zuordnen von Kennungen,
die in Signalen enthalten sind, welche von Sendern in einem Reifendrucküberwachungssystem ausgesandt werden,
das aus je einer nachfolgend als Radelektronik bezeichneten Einrichtung an jedem einer Anzahl von Rädern eines Fahrzeuges, welche einen Druckmeßfühler, einen Beschleunigungssensor, einen Sender und eine Sendeantenne enthält,
sowie aus einer oder mehreren Empfangsantennen an der Karosserie des Fahrzeuges und aus einer an diese über Kabel angeschlossenen Empfangsund Auswerteelektronik besteht,
wobei die Radelektroniken an den verschiedenen Rädern in übereinstimmender Einbaulage vorgesehen sind,
zu den Positionen der Räder, an welchen sich die Sender befinden,
indem die Signale, welche die Kennung enthalten, von der einen oder den mehreren Empfangsantennen aufgefangen, an die Empfangs- und Auswerteelektronik weitergeleitet und darin hinsichtlich ihrer Kennung ausgewertet werden,
zu welchem Zweck an den überwachten Rädern zusätzlich zum Luftdruck im Reifen eine sich aus dem Bewegungszustand des jeweiligen Rades ergebende Beschleunigung gemessen, ein daraus abgeleitetes Signal mittels des jeweiligen Senders der Empfangs- und Auswerteschaltung signalisiert
und auf eine im Signal enthaltene Information über die Lage jenes Rades ausgewertet wird, von welchem das Signal ausgeht,
wobei zur Unterscheidung von Rädern auf der rechten Seite des Fahrzeugs von Rädern auf der linken Seite des Fahrzeugs für jedes laufende Rad das Vorzeichen einer an der Radelektronik auftretenden Bahnbeschleunigung b ermittelt wird,
**dadurch gekennzeichnet, daß** zusätzlich das Vorzeichen der während der Bahnbeschleunigung **b** auftretenden Änderung der Zentrifugalbeschleunigung z ermittelt und mit dem für das jeweilige Rad bestimmten Vorzeichen der Bahnbeschleunigung **b** multipliziert wird,
und daß durch Vergleichen der für die verschiedenen Räder ermittelten Produkte aus diesen beiden Vorzeichen zwischen Rädern auf der rechten Seite des Fahrzeugs und Rädern auf der linken Seite des Fahrzeugs unterschieden wird.

2. Verfahren nach Anspruch 1, **dadurch gekennzeichnet, daß** das Vorzeichen der Bahnbeschleunigung b bereits in einer am Rad vorgesehenen Auswerteschaltung bestimmt wird, welche Bestandteil der Radelektronik ist.

3. Verfahren nach Anspruch 1 oder 2, **dadurch gekennzeichnet, daß** den auf einer gemeinsamen Achse des Fahrzeuges angeordneten Rädern jeweils nur eine einzige gemeinsame Empfangsantenne zugeordnet wird.

4. Verfahren nach einem der vorstehenden Ansprüche, **dadurch gekennzeichnet, daß** ein bei rollendem Fahrzeug empfangenes Signal, welches eine Zentrifugalbeschleunigung **z = 0** signalisiert, einem mitgeführten Reserverad zugeordnet wird.

5. Verfahren nach einem der vorstehenden Ansprüche, **dadurch gekennzeichnet, daß** zur Unterscheidung von gelenkten Rädern und nicht gelenkten Rädem des Fahrzeuges Signale, welche die Stärke der gemessenen Zentrifugalbeschleunigung z angeben, über eine vorgegebene Zeitspanne integriert werden, wobei den gelenkten Rädern jene Signale zugeordnet werden, welche die größten Integralwerte liefern.

6. Verfahren nach einem der vorstehenden Ansprüche, **dadurch gekennzeichnet, daß** zur Unterscheidung von gelenkten Rädern und nicht gelenkten Rädem des Fahrzeuges während Lenkbewegungen das Auftreten einer Coriolisbeschleunigung ermittelt, signalisiert und ausgewertet wird.

7. Verfahren nach Anspruch 5 oder 6. **dadurch gekennzeichnet, daß** für die Gesamtheit der sendenden Räder des Fahrzeuges lediglich eine einzige Antenne benutzt wird.

8. Verfahren nach einem der Ansprüche 1 bis 4, **dadurch gekennzeichnet, daß** Signale, die von vorderen Rädern kommen, dadurch von Signalen unterschieden werden, die von hinteren Rädern kommen, daß man die Intensitäten der Signale vergleicht, die von der jeweiligen Empfangsantenne empfangen werden, und bei Betrachtung der den vorderen Rädern zugeordneten Empfangsantenne die stärkeren Signale den Vorderrädern und die schwächeren Signale den Hinterrädern zuordnet,
bei Betrachtung der den hinteren Rädem zugeordneten Empfangsantenne hingegen die stärkeren Signale den Hinterrädern und die schwächeren Signale den Vorderrädern zuordnet.

## Claims

1. A method for allocating identifiers,
that are contained in signals issued by transmitters arranged in a tire pressure monitoring system,
comprising on each of a number of vehicle wheels a device which hereinafter is designated as wheel electronics and comprises a pressure sensor, an acceleration sensor, a transmitter and a transmission antenna,
and further comprising one or more receiving antennas on the vehicle body, and an electronic receiving and analysis equipment connected to such antennas by wire,
the wheel electronics being provided on the different wheels in the same mounting positions,
to the positions of the wheels on which the transmitters are arranged, by picking up the signals, containing the identifier, by the one or more receiving antennas, transmitting them to the electronic receiving and analysis equipment and analyzing them therein with respect to their identifier,
for which purpose one measures on the monitored wheels in addition to the air pressure in the tire an acceleration value derived from the moving condition of the respective wheel, transmits a signal derived therefrom by means of the respective transmitter to the receiving and analysis circuit and
analyses the signal for containing an information regarding the position of the wheel from which the signal has been obtained,
the method including the step of determining the sign of the translation acceleration b occurring at the wheel electronics and taking it for differentiating between wheels on the right side of the vehicle and wheels on the left side of the vehicle,
**characterized in that** that the sign of the variation of the centrifugal acceleration **z** occurring during the translation acceleration **b** is additionally determined and multiplied by the sign of the translation acceleration **b** determined for the respective wheel, and
that one differentiates between wheels on the right side of the vehicle and wheels on the left side of the vehicle by comparing the products of the two signs determined for the different wheels.

2. The method as defined in Claim 1, **characterized in that** the sign of the translation acceleration **b** is determined already in an analysis circuit provided on the wheel as part of the wheel electronics.

3. The method as defined in Claim 1 or Claim 2, **characterized in that** a single common receiving antenna, only, is allocated to wheels arranged on a common axle of the vehicle.

4. The method as defined in one of the preceding Claims, **characterized in that** a signal, that is received while the vehicle is moving and that indicates a centrifugal acceleration of **z = 0**, is allocated to a spare wheel carried in the vehicle.

5. The method as defined in one of the preceding Claims, **characterized in that** for differentiating between steered and non-steered wheels of the vehicle, signals indicating the magnitude of the measured centrifugal acceleration **z** are integrated over a predetermined period of time, the steered wheels being allocated those signals that provide the highest integrated measurands.

6. The method as defined in one of the preceding Claims, **characterized in that** for differentiating between steered wheels and non-steered wheels of the vehicle, the occurrence of a Coriolis acceleration during steering movements is determined, signalled and evaluated.

7. The method as defined in Claim 5 or Claim 6, **characterized in that** a single antenna, only, is used for all the signal-transmitting wheels of the vehicle.

8. The method as defined in any of Claims 1 through 4, **characterized in that** signals obtained from front wheels are distinguished from signals obtained from rear wheels by comparing the intensities of the signals received by the respective receiving antenna and, in observing the receiving antenna allocated to the front wheels, allocating the stronger signals to the front wheels and the weaker signals to the rear wheels, while, in observing the receiving antenna allocated to the rear wheels, allocating the stronger signals to the rear wheels and the weaker signals to the front wheels.

## Revendications

1. Procédé pour l'attribution d'identificateurs
qui sont contenus dans des signaux qui sont transmis par des émetteurs dans un système de surveillance de la pression des bandages pneumatiques,
système qui est constitué par respectivement un mécanisme, désigné ci-après par l'expression « électronique de roue », sur chacune des roues d'un véhicule, le mécanisme contenant un dispositif de mesure de la pression, un capteur de l'accélération, un émetteur et une antenne d'émission,
et qui est constitué par une ou plusieurs antennes de réception sur la carrosserie du véhicule automobile et par une électronique de réception et d'évaluation raccordée auxdites antennes par des câbles,
les électroniques de roues étant prévues sur les différentes roues à des endroits de montage en concordance avec les positions des roues sur lesquelles se trouvent les émetteurs,
comprenant le fait de capter les signaux, qui contiennent l'identificateur, via lesdites une ou plusieurs antennes de réception, d'acheminer lesdits signaux à l'électronique de réception et d'évaluation et de les y évaluer quant à leur identificateur ;
à cet effet, en ce qui concerne les roues surveillées, en plus de la pression de l'air régnant dans le bandage pneumatique, on mesure une vitesse que l'on obtient à partir de l'état de mouvement de la roue respective, on forme un signal qui dérive de ladite mesure au moyen de l'émetteur respectif du circuit de réception et d'évaluation, et on évalue les informations contenues dans le signal concernant l'état de la roue d'où provient le signal ;
pour chaque roue en circulation, afin d'opérer une distinction entre les roues du côté droit du véhicule automobile et les roues du côté gauche du véhicule automobile, on détermine le signe d'une accélération de parcours b apparaissant sur l'électronique de roue,
**caractérisé en ce qu'**on détermine, en outre, le signe de la modification de l'accélération centrifuge z apparaissant lors de l'accélération de parcours b et on le multiplie par le signe d'accélération de trajectoire b déterminé pour la roue respective,
et **en ce que**, par la comparaison des produits déterminés pour les différentes roues, à partir de ces deux signes, on opère une distinction entre les roues du côté droit du véhicule automobile et les roues du côté gauche du véhicule automobile.

2. Procédé selon la revendication 1, **caractérisé en ce qu'**on détermine le signe de l'accélération de parcours b, déjà dans un circuit d'évaluation prévu sur la roue et qui fait partie de l'électronique de roue.

3. Procédé selon la revendication 1 ou 2, **caractérisé en ce qu'**on attribue aux roues disposées sur un essieu commun du véhicule automobile, respectivement une seule antenne de réception commune.

4. Procédé selon l'une quelconque des revendications précédentes, **caractérisé en ce qu'**un signal, reçu lorsque le véhicule automobile roule, qui indique une accélération centrifuge z = 0, est attribué à une roue de rechange emportée dans le véhicule automobile.

5. Procédé selon l'une quelconque des revendications précédentes, **caractérisé en ce que**, pour opérer une distinction entre des roues guidées et des roues non guidées du véhicule automobile, on intègre des signaux qui indiquent l'intensité de l'accélération centrifuge mesurée z pendant un laps de temps prédéfini, les signaux qui fournissent les intégrales supérieures étant attribués aux roues guidées.

6. Procédé selon l'une quelconque dés revendications précédentes, **caractérisé en ce que**, pour opérer une distinction entre des roues guidées et des roues non guidées du véhicule automobile lors de négociations de virages, on détermine l'apparition d'une accélération de Coriolis, on la transforme en signal et on l'évalue.

7. Procédé selon la revendication 5 ou 6, **caractérisé en ce qu'**on utilise une seule antenne pour la totalité des roues émettrices du véhicule automobile.

8. Procédé selon l'une quelconque des revendications 1 à 4, **caractérisé en ce qu'**on opère une distinction entre des signaux qui proviennent des roues avant et des signaux qui proviennent des roues arrière par le fait de comparer les intensités des signaux qui sont reçus par les antennes de réception respectives, et, en considérant l'antenne de réception attribuée aux roues avant, par le fait d'attribuer les signaux les plus forts aux roues avant et les signaux les plus faibles aux roues arrière,
par contre, en considérant l'antenne de réception attribuée aux roues arrière, par le fait d'attribuer les signaux les plus forts aux roues arrière et les signaux les plus faibles aux roues avant.
